# EUROPÄISCHE PATENTANMELDUNG

(11) **EP 0 531 655 A2**
(43) Veröffentlichungstag der Anmeldung: **17.03.1993**
(21) Anmeldenummer: 92111706.5
(22) Anmeldetag: 09.07.1992
(51) Int. Cl.: F16L 59/12

(54) **Rohrschelle für Tieftemperaturleitungen**

(30) Priorität: 12.09.1991 CH 2719/91
(71) Anmelder: Korkstein AG, CH-5623 Boswil (CH)
(72) Erfinder: Breitenmoser, Werner, CH-8963 Kindhausen (CH)
(74) Vertreter: Blum, Rudolf Emil Ernst

(57) **Zusammenfassung**

Die Rohrschelle weist einen Dämmkörper, der aus zwei miteinander verbindbaren Halbschalen (1,2) besteht und ein Anschlussorgan (3) zur Aufhängung auf. Am Umfang sind die Halbschalen mit einer Metallfolie (4) versehen, die als Dampfsperre wirkt. Diese Rohrschelle eignet sich insbesondere zur Aufhängung von Tieftemperaturleitung.

## Beschreibung

Die vorliegende Erfindung betrifft eine Rohrschelle gemäss dem Oberbegriff des Anspruches 1.

Es ist bekannt, Kälterohrleitungen mit einer Isolierung mit Dampfsperre zu versehen, wobei im Bereich der Rohrschelle eine Lücke in der Dampfsperre zurückgeblieben ist.

Der Erfindung liegt die Aufgabe zugrund eine Rohrschelle zu schaffen, welche zur Verwendung bei Tieftemperaturleitungen geeignet ist.

Diese Aufgabe wird erfindungsgemäss dadurch gelöst, dass die Halbschalen am Umfang mit einer Beschichtung versehen sind, die als Dampfsperre wirkt.

Die Vorteile der Erfindung sind im wesentlichen in der kostengünstigen Herstellung und Anwendung zu sehen.

Vorteilhafte Ausführungsformen der Erfindung ergeben sich aus den abhängigen Ansprüchen.

Die Erfindung wird anhand beiliegenden Zeichnungen erläutert, die eine Ausführungsform der erfindungsgemässen Rohrschelle zeigt.

Die Rohrschelle besteht aus zwei Halbschalen 1,2 und einem Aufhängeorgan 3. Die Halbschalen 1,2 sind am Umfang mit einer Beschichtung 4 versehen, die als Dampfsperre wirkt.

Eine andere Ausführungsform der erfindungsgemässen Rohrschelle ist derart ausgebildet, wie dies in der DE-U 87 12 235.9 beschrieben ist. Diese Rohrschelle hat zwei Halbschalen aus Polyurethan, in welche jeweils ein zweiteiliges Halteelement eingebettet ist und die einen Bügel bilden. Die Halbschalen sind mittels Schrauben verbunden, die mit den Bügel in Eingriff stehen. Ferner ist ein Gewindebolzen zum Aufhängen der Rohrschelle vorgesehen, der in den Bügel eingeschraubt ist.

Die Beschichtung besteht aus einer Metallfolie, z.B. aus Aluminium und ist an die Halbschalen angeschäumt. Ist aber auch möglich die Metallfolie auf die Halbschalen aufzukleben, so dass auch Dämmkörper aus anderen Materialien verwendet werden können.

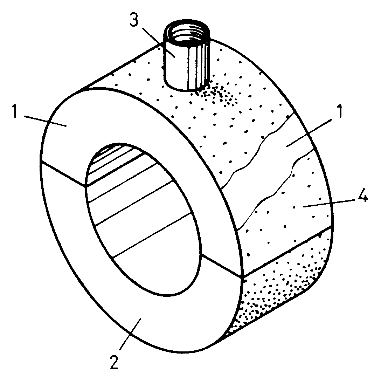

## Patentansprüche

1. Rohrschelle für isolierte Kälterohrleitungen, welche Rohrschelle einen das aufzunehmende Rohr umschliessenden Dämmkörper, der aus zwei miteinander verbindbaren Halbschalen besteht und ein Anschlussorgan zur Aufhängung aufweist, dadurch gekennzeichnet, dass die Halbschalen (1,2) am Umfang mit einer Beschichtung (4) versehen sind, die als Dampfsperre wirkt.

2. Rohrschelle nach Anspruch 1, dadurch gekennzeichnet, dass die Beschichtung (4) aus einer Metallfolie besteht.

3. Rohrschelle nach einem der Ansprüche 1 bis 3, dadurch gekennzeichnet, dass die Halbschalen (1,2) aus Kunststoffschaum bestehen und dass die Metallfolie (4) angeschäumt ist.

4. Rohrschelle nach einem der Ansprüche 1 bis 3, dadurch gekennzeichnet, dass die Halbschalen (1,2) aus Kunststoffschaum bestehen und dass die Metallfolie (4) aufgeklebt ist.
